# EUROPEAN PATENT SPECIFICATION

(11) **EP 4 009 123 B1**
(45) Date of publication and mention of the grant of the patent: **03.07.2024**
(21) Application number: 20211986.3
(22) Date of filing: 04.12.2020
(51) Int. Cl.: G05B 19/409

(54) **METHOD OF OPERATING A MACHINE SYSTEM AND MACHINE SYSTEM**
VERFAHREN ZUM BETREIBEN EINES MASCHINENSYSTEMS UND MASCHINENSYSTEM
PROCÉDÉ DE FONCTIONNEMENT D'UN SYSTÈME DE MACHINE ET SYSTÈME DE MACHINE

(43) Date of publication of application: 08.06.2022
(73) Proprietor: United Grinding Group Management AG, 3014 Bern (CH)
(72) Inventor: PLÜSS, Christoph, 3400 Burgdorf (CH); DIERGARDT, Urs, 3006 Bern (CH); JOSI, Christian, 3612 Steffisburg (CH); KÖHNLEIN, Marcus, 8153 Rümlang (CH)
(74) Representative: Maiwald GmbH

(56) References cited:
- WO-A1-2019/113134
- US-A1- 2018 088 564

## Description

### Field of the invention

The invention relates to a method of operating a machine system comprising a plurality of machines and a machine system comprising a plurality of machines.

### Background of the invention

Operating a machine system comprising a plurality of machines by at least one operator requires an interaction between the machine system and the operator.

As an example, German patent application DE 10 2009 002 136 A1 discloses a method for displaying a current task list on the graphical user interface of a control computer of a processing machine. Only those tasks running on the control computer are displayed when the task list is called up that are listed in a release list. Only those tasks are listed in said release list which are released as a function of predetermined, dynamically monitored selection criteria.

As another example, Korean patent application KR 2009 0059693 A discloses a user information recognition device for reading user recognition information input from a user. An external storage device is used for storing user information. The user information stored in the external storage device is read, and user recognition information recognized from the user recognition device is compared with the user information stored in the external storage device to determine whether the user has permission to use. When it is determined that the user has the right to use, the user interface configuration information stored in the external storage device is retrieved, and a human-machine-interface function module corresponding to the machine tool model designated for each user is configured according to the user interface configuration information.

United States patent application US 2018/0088564 A1 discloses an industrial workflow tracking and identification system that captures optimal employee workflows for addressing maintenance issues or operating industrial systems, and renders these workflows at appropriate times in order to guide operators and maintenance personnel through optimal sequences for carrying out operations or addressing maintenance issues.

International patent application WO 2019/113134 A1 discloses a technology that enables a receipt of a plurality of readings from a sensor monitoring a piece of equipment in a building. The receipt enables an identification of a present fault or a projected fault in the piece of equipment. The identification enables a generation of an augmented reality content related to the present fault or the projected fault. The augmented reality content is sent to a mobile device when the mobile device is in proximity of the piece of equipment.

However, the interplay between the machine and the operators is still governed by strict rules.

### Summary of the invention

It is an object of the present invention to provide a method of operating a machine system comprising a plurality of machines featuring an improved interplay between the machine system and operators. It is another object of the present invention to provide a machine system comprising a plurality of machines that enables an improved interplay between the machine system and operators.

This object is achieved by the subject-matter of the independent claims.

In an aspect of the present invention, a method of operating a machine system comprising a plurality of machines is provided. Said machines may be any kind of production machines and are in particular machine tool devices with numerical control (NC) or programmable logic controller (PLC) control systems.

The machines are connected to a computing system of the machine system. Said computing system may be a central computing system or a decentralized computing system, e.g., a cloud system. The computing system may also a computing unit of one of the machines or a network of computing units of some of the machines. The computing system may control the machines and may receive messages from the machines, such as error messages or alerts.

The machine system further comprises human-machine-interfaces to present machine information and at least one operator detection unit. Said operator detection unit detects a machine operator being in the proximity of a machine and/or walking past a machine. The operator detection units may be allocated to the machines of the machine system but they may also be located between the machines or be attached to the ceiling above the machines.

The operator detection unit collects operator behavior data and sends the collected operator behavior data to the computing system. The computing system stores the operator behavior data, determines from the operator behavior data, operator behavior habits and selects information to be presented to the machine operator in dependence on the operator behavior data and on the operator behavior habits and selects at least one of the human-machine-interfaces to present said information. The selected information to be presented to the machine operator is chosen among machine status information, production process information, tasks that have to be performed at machines, tasks that will have to be performed at machines in the future and/or warning message. Based on this selection, the selected human-machine-interfaces present the selected information.

Since information to be presented to the operator and the human-machine-interfaces that present said information are selected based on the operator behavior data and operator behavior habits, there is a good interplay between the machine system and the operator. Hence, the machine system may select the information to be presented to the operator such that the operator may work more efficiently.

In an example, the human-machine-interface is a panel adapted to display the selected information. A panel may display both simple information, e.g., a few words and complex information, e.g., charts or graphs. Said panel may be a touch display such that the operator can provide feedback via the panel. Additionally or alternatively, the human-machine-interface may be a loudspeaker adapted to play the selected information. Playing information via a loudspeaker has the advantage that the operator is not required to look at a display while receiving the information.

In an example, human-machine-interfaces that are located in areas where no operator has been detected by the operator detection unit are put in standby mode. This saves energy and prolongs the life of the human-machine-interfaces.

In an example, the operator detection unit comprises a proximity sensor, a camera, a wireless communication unit and/or a radio-frequency identification unit. Proximity sensors sense the proximity of an operator and are therefore preferably positioned at or close to a machine such that the proximity of the operator to the machine is detected. Cameras may be positioned at or close to a machine but may also be positioned more centrally, e.g., at the ceiling. In particular, wide-angle cameras may cover a wide area. A wireless communication unit may comprise a wireless communication device carried by or worn by the operator. A position of the operator may then be determined, for example, by the signal strength between the wireless communication device and one or more wireless transceivers.

Similarly, a radio-frequency identification unit may comprise a radio-frequency identification tag carried by or worn by the operator and a corresponding radio-frequency identification reader. In particular, in order to detect the machine operator being in the proximity of a machine and/or walking past a machine, input from several parts of the operator detection unit are used, e.g., a proximity sensor to sense that a person is close to the machine and a wireless communication device to identify said person.

In an example, the operator behavior data includes an operator identification, an operator location, an operator velocity, directions of the operator's body movement, information about the current occupation of the operator, operator concentration, operator focus and/or operator vital signs. Operator identification may, e.g., be performed by an identification of the wireless communication device or the radio-frequency identification tag carried by or worn by the operator. The operator may also be identified by image recognition based on the camera images. The operator location may be determined based on the operator's proximity to proximity sensors, based on the signal strength of wireless communication and/or radio-frequency identification signals or based on the analysis of images showing the operator. The operator velocity may be determined from a time-series of operator locations and the corresponding difference quotients. Directions of the operator's body movement, operator concentration and/or operator focus may be determined based on an analysis of the camera images. The current occupation of the operator may be determined based on an analysis of the camera images or via feedback from the machine that the operator is currently working on. Finally, the vital signs of the operator may be determined, e.g., by an activity tracker worn by the operator.

The operator behavior habits are determined from the operator behavior data, e.g., by phenomenological models or by artificial intelligence. Phenomenological models may have a predetermined operator path as an input and fit times needed to cover certain parts of the path and times needed to complete tasks at the machine based on the operator behavior data. Artificial intelligence models may also be trained with the available operator behavior data. As a result, the operator behavior habits may include information about times needed for the operator to move from one machine to the next, times needed to perform certain tasks at a machine, points in time when the operator starts and stops working and/or points in time and durations of breaks.

The selected information to be presented is made, e.g., according to importance of the information, urgency of the information and/or number of pieces of information that the operator can take in at a given time.

In an example, in addition to presenting the selected information with the human-machine-interface, the computing system triggers an alert to alert the operator of the selected information, in particular if the selected information is an urgent and/or important task and/or a warning. Said alert is adapted to draw the operator's attention to the respective selected information.

In an example, the alert is visual, acoustic and/or haptic, e.g., by a light signal, an alert sound or a vibration. Said light signal may be a flashing light and the alert sound may be a sound comprising one or several notes. In particular, the alert may be coded, e.g., such that a particular color of the light signal or a particular sequence of notes of the alert sound may correspond to different levels or types of alerts. The haptic alert may be generated by a human-machine-interface carried by or worn by the operator, such as a smartphone or a smartwatch.

In an example, the human-machine-interface selected to present the information is a primary human-machine-interface located at or close to the machine in the proximity of the operator. Said human-machine-interface may be directly attached to the respective machine or may be attached to a stand in front of or next to the machine. The human-machine-interface selected to present the information may also be a secondary, portable human-machine-interface allocated to the operator. Said secondary, portable human-machine-interface may be, e.g., a smartphone, which includes both a panel and a loudspeaker, a smartwatch or a headset.

In an example, the presentation of the information is adapted in dependence on the particular human-machine-interface it is presented on, the identity of the operator and/or the distance of the operator to the human-machine-interface. For example, on a small display or via a headset, an information may be presented that a particular machine needs servicing, whereas on a large display, the details of the servicing needs may also be displayed. As another example, an experienced operator may be asked to perform a certain, more difficult task, whereas an inexperienced operator may just be asked to call a more experienced operator. As yet another example, if the operator is far away from a machine that needs servicing, a large panel may display a few large letters indicating such servicing need such that the operator can read it from far away. As the operator approaches the machine, the letters may become smaller and more information may be displayed.

In an example, if the information presented to the operator is a task to be performed, the operator performs the task and confirms the completion of the task with the human-machine-interface. Depending on the human-machine-interface, e.g., a button next to a panel may be pressed, the touchscreen of a panel may be used or a voice input may be made via the microphone of a headset. Alternatively, the operator may use the human-machine-interface to input why the task has not been completed. In the latter case, the computing system may re-schedule the task, e.g., for a different operator.

In another aspect of the present invention, a machine system is provided, comprising a plurality of machines. Said machines may be any kind of production machines and are in particular machine tool devices with numerical control (NC) or programmable logic controller (PLC) control systems.

The machine system further comprises a computing system, wherein the machines are connected to the computing system. Said connection may be a wired and/or a wireless connection.

The machine system further comprises human-machine-interfaces to present machine information and at least one operator detection unit to detect a machine operator being in the proximity of a machine and/or walking past a machine and to collect operator behavior data. Said human-machine-interfaces may be primary human-machine-interfaces allocated to a machine and/or secondary human-machine-interfaces allocated to an operator. The operator detection units may be allocated to the machines of the machine system, be located between the machines and/or be attached to the ceiling above the machines. The machine system is operated according to the description above. Hence, it provides good interplay between the machine system and the operator and promotes an efficient work of the operator.

It shall be understood that a preferred embodiment of the invention can also be any combination of the dependent claims with the respective independent claim.

These and other aspects of the invention will be apparent from and elucidated with reference to the embodiments described hereinafter.

### Brief description of the drawings

In the following, preferred embodiments of the invention will be described, by way of example only, and with reference to the drawings in which:
- Fig. 1: shows a schematic top view of a machine system,
- Fig. 2: shows a schematic front view of a machine,
- Fig. 3a: shows one embodiment of a human-machine-interface and
- Fig. 3b: shows another embodiment of a human-machine-interface.

### Detailed description of embodiments

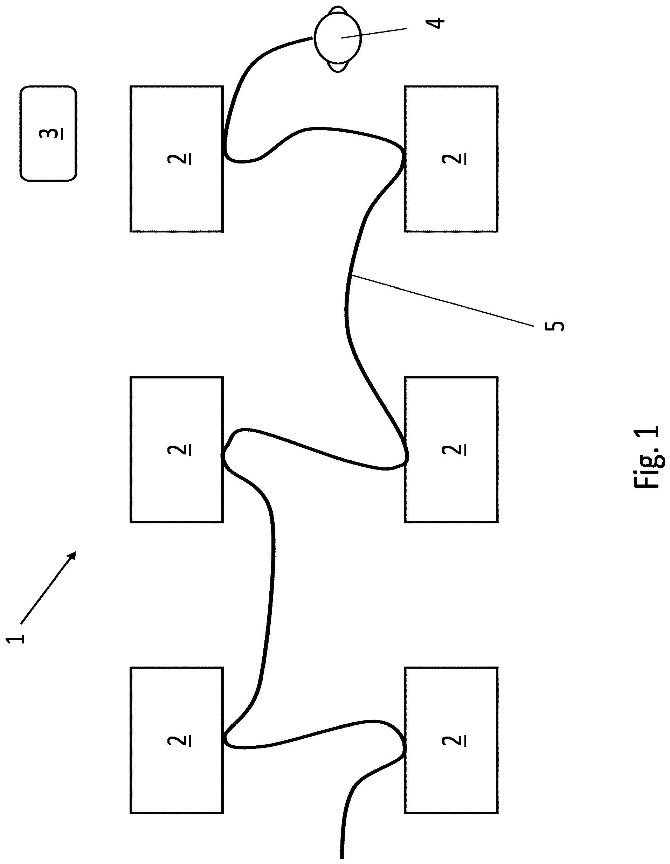

Figure 1 shows a machine system 1 comprising a plurality of machines 2. The machines 2 may be any kind of production machine and are in particular machine tool devices with numerical control (NC) or programmable logic controller (PLC) control systems.

The machines 2 are connected to a computing system 3 of the machine system 1. The connection may be wired or wireless and is not shown here for reasons of clarity. As an example, the machines 2 may be integrated into a consistent middleware operating system of the computing system 2.

Also shown in Figure 1 is an operator 4 who performs, e.g., service, maintenance or repair tasks at the machine, and a path that the operator 4 has taken, representing operator behavior data 5. Besides the operator's location, the operator behavior data 5 may include an operator identification, an operator velocity, directions of the operator's body movement, information about the current occupation of the operator, operator concentration, operator focus and/or operator vital signs.

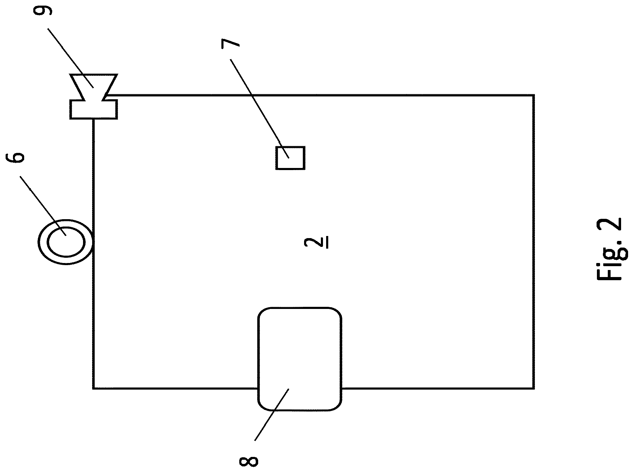

Figure 2 shows a schematic front view of the machine 2. The machine 2 comprises a camera 6 and a proximity sensor 7, both of which are used to collect operator behavior data 5. Further operator detection units may include wireless communication units or radio-frequency identification units but are not shown here for reasons of clarity.

The machine 2 further comprises a panel 8 and a loudspeaker 9, which are primary human-machine interfaces. Via the panel 8, information may be displayed to the operator 4. If the panel 8 is a touchscreen, the operator 4 may also enter information via the panel 8, e.g. concerning a completed task or a task that could not be completed. Via the loudspeaker 9, acoustic information may be played to the operator 4 and/or the operator 4 may be alerted of an important information, a warning or an error message.

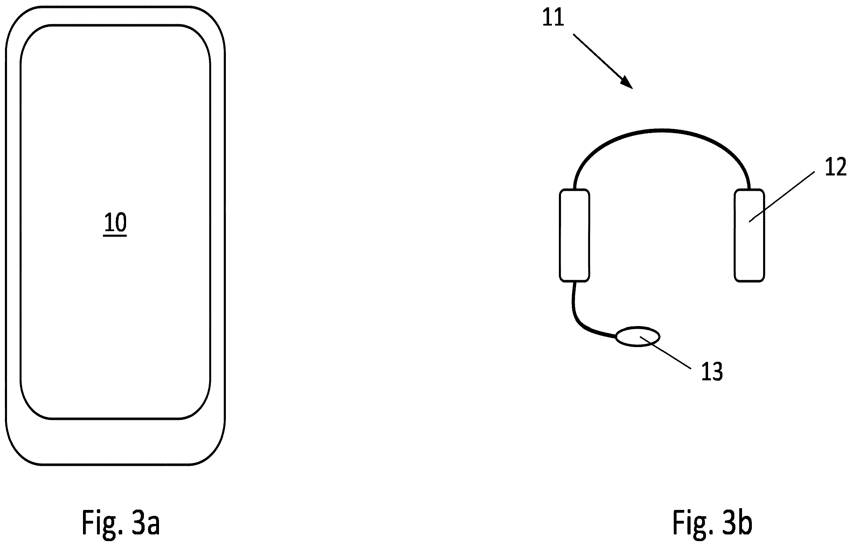

Figures 3a and 3b show two examples of secondary, portable human-machine-interfaces which are allocated to the operator (4): Figure 3a shows a smartphone 10 and Figure 3b shows a headset 11. Via the smartphone 10, information may be displayed to the operator and the operator 4 may enter responses to certain information. Via the speakers 12 of the headset 11, information may be played to the operator 4 and the operator 4 may reply via the microphone 13. Other examples of secondary, portable human-machine-interfaces include smart glasses and smartwatches.

In an example, the cameras 6, proximity sensors 7 and other operator detection units collect operator behavior data 5 and send it to the computing system 3. The computing system 3 collects the operator behavior data 5, stores it, and determines operator behavior habits based on the operator behavior data 5. Such operator behavior habits may include the time needed for the operator 4 to move from one machine 2 to the next machine 2, the path that the operator 4 follows between the machines 2, the time that the operator 4 spends at each machine 2 and the extra time that the operator 4 needs if there is a specific task to be completed at the machine 2, and/or points in time and durations of breaks that the operator 4 takes, etc.

Based on the operator behavior habits and hence on the operator behavior data 5, the computing system 3 selects information to be presented to the operator 4 and the human-machine-interface that presents said information. For example, the computing system 3 receives an alert from one of the machines 2 that maintenance work has to be performed within the next 15 minutes. In the example, the operator 4 happens to be in the proximity of said machine 2. The computing system 3 determines, based on the operator behavior habits, that the operator 4 will not return to the machine 2 for another hour. Therefore, the computing system 3 alerts the operator 4 via the loudspeaker 9 that a task has to be performed at the machine 2 and displays details about the required maintenance work on the panel 8. When the operator 4 has completed the maintenance work, he confirms this by pressing a button on the panel 8.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. Any reference signs in the claims should not be construed as limiting the scope.

### List of reference signs

- 1: machine system
- 2: machine
- 3: computing system
- 4: operator
- 5: operator behavior data
- 6: camera
- 7: proximity sensor
- 8: panel
- 9: loudspeaker
- 10: smartphone
- 11: headset
- 12: speaker
- 13: microphone

## Claims

1. Method of operating a machine system (1) comprising a plurality of machines (2), in particular machine tool devices with numerical control, NC, or programmable logic controller, PLC, control systems, wherein the machines (2) are connected to a computing system (3) of the machine system (1), wherein the machine system (1) comprises human-machine-interfaces (8; 9; 10; 11) to present machine (2) information and wherein the machine system (1) comprises at least one operator detection unit (6; 7), wherein
the operator detection unit (6; 7) detects a machine operator (4) being in the proximity of a machine (2) and/or walking past a machine (2) and collects operator behavior data (5),
the operator detection unit (6; 7) sends the collected operator behavior data (5) to the computing system (3),
the operator behavior data (5) is stored by the computing system (3),
operator behavior habits are determined from the operator behavior data (5),
the computing system (3) selects information to be presented to said machine operator (4) in dependence on the operator behavior data (5) and on the operator behavior habits and selects at least one of the human-machine-interfaces (8; 9; 10; 11) to present said information,
wherein the selected information to be presented to the machine operator (4) is chosen among machine (2) status information, production process information, tasks that have to be performed at machines (2), tasks that will have to be performed at machines (2) in the future and/or warning messages and
the selected human-machine-interfaces (8; 9; 10; 11) present the selected information.

2. Method according to claim 1, wherein the human-machine-interface (8; 9; 10; 11) is a panel (8; 10) adapted to display the selected information and/or a loudspeaker (9; 11) adapted to play the selected information.

3. Method according to claim 1 or 2, wherein human-machine-interfaces (8; 9; 10; 11) that are located in areas where no operator (4) has been detected by the operator detection unit (6; 7) are put in standby mode.

4. Method according to any of claims 1 to 3, wherein the operator detection unit (6; 7) comprises a proximity sensor (7), a camera (6), a wireless communication unit and/or a radio-frequency identification unit.

5. Method according to any of claims 1 to 4, wherein the operator behavior data (5) includes an operator (4) identification, an operator (4) location, an operator (4) velocity, directions of the operator's (4) body movement, information about the current occupation of the operator (4), operator (4) focus and/or operator (4) vital signs.

6. Method according to any of claims 1 to 5, wherein in addition to presenting the selected information with the human-machine-interface (8; 9; 10; 11), the computing system (3) triggers an alert to alert the operator (4) of the selected information.

7. Method according to claim 6, wherein the alert is triggered if the selected information is an urgent and/or important task and/or a warning.

8. Method according to claim 6 or 7, wherein the alert is visual, acoustic and/or haptic, e.g., by a light signal, an alert sound or a vibration.

9. Method according to any of claims 1 to 8, wherein the human-machine-interface (8; 9; 10; 11) selected to present the information is a primary human-machine-interface (8; 9) located at or close to the machine (2) in the proximity of the operator (4) or a secondary, portable human-machine-interface (10; 11) allocated to the operator (4).

10. Method according to any of claims 1 to 9, wherein the presentation of the information is adapted in dependence on the particular human-machine-interface (8; 9; 10; 11) it is presented on, the identity of the operator (4) and/or the distance of the operator (4) to the human-machine-interface (8; 9; 10; 11).

11. Method according to any of claims 1 to 10, wherein, if the information presented to the operator (4) is a task to be performed, the operator (4) performs the task and confirms the completion of the task with the human-machine-interface (8; 9; 10; 11) or uses the human-machine-interface (8; 9; 10; 11) to input why the task has not been completed.

12. Machine system,
wherein the machine system (1) is operated according to any of claims 1 to 11.

## Patentansprüche

1. Verfahren zum Betreiben eines Maschinensystems (1), umfassend mehrere Maschinen (2), insbesondere Werkzeugmaschinen mit numerischen Steuerungssystemen (Numerical Control, NC-Systemen) oder speicherprogrammierbaren Steuerungssystemen (Programmable Logic Controller, PLC-Systemen), wobei die Maschinen (2) mit einem Computersystem (3) des Maschinensystems (1) verbunden sind, wobei das Maschinensystem (1) Mensch-Maschine-Schnittstellen (8; 9; 10; 11) zum Präsentieren von Informationen der Maschine (2) umfasst und wobei das Maschinensystem (1) mindestens eine Bedienerdetektionseinheit (6; 7) umfasst, wobei
die Bedienerdetektionseinheit (6; 7) einen Maschinenbediener (4) detektiert, der sich in der Nähe einer Maschine (2) aufhält und/oder an einer Maschine (2) vorbeigeht, und Bedienerverhaltensdaten (5) erfasst,
die Bedienerdetektionseinheit (6; 7) die erfassten Bedienerverhaltensdaten (5) an das Computersystem (3) sendet,
die Bedienerverhaltensdaten (5) durch das Computersystem (3) gespeichert werden,
Bedienerverhaltensgewohnheiten aus den Bedienerverhaltensdaten (5) bestimmt werden,
das Computersystem (3) Informationen, die dem Maschinenbediener (4) präsentiert werden sollen, in Abhängigkeit von den Bedienerverhaltensdaten (5) und den Bedienerverhaltensgewohnheiten auswählt und mindestens eine der Mensch-Maschine-Schnittstellen (8; 9; 10; 11) zum Präsentieren dieser Informationen auswählt,
wobei die ausgewählten Informationen, die dem Maschinenbediener (4) präsentiert werden sollen, aus Statusinformationen der Maschine (2), Produktionsprozessinformationen, Aufgaben, die an Maschinen (2) ausgeführt werden müssen, Aufgaben, die in Zukunft an Maschinen (2) ausgeführt werden müssen, und/oder Warnmeldungen ausgewählt werden, und
die ausgewählten Mensch-Maschine-Schnittstellen (8; 9; 10; 11) die ausgewählten Informationen präsentieren.

2. Verfahren nach Anspruch 1, wobei die Mensch-Maschine-Schnittstelle (8; 9; 10; 11) ein Panel (8; 10) ist, das dafür ausgelegt ist, die ausgewählten Informationen anzuzeigen, und/oder ein Lautsprecher (9; 11) ist, der dafür ausgelegt ist, die ausgewählten Informationen abzuspielen.

3. Verfahren nach Anspruch 1 oder 2, wobei Mensch-Maschine-Schnittstellen (8; 9; 10; 11), die sich in Bereichen befinden, in denen die Bedienerdetektionseinheit (6; 7) kein Bediener (4) detektiert hat, in einen Standby-Modus versetzt werden.

4. Verfahren nach einem der Ansprüche 1 bis 3, wobei die Bedienerdetektionseinheit (6; 7) einen Näherungssensor (7), eine Kamera (6), eine Drahtloskommunikationseinheit und/oder eine Hochfrequenz-Identifikationseinheit umfasst.

5. Verfahren nach einem der Ansprüche 1 bis 4, wobei die Bedienerverhaltensdaten (5) eine Identifikation des Bedieners (4), einen Standort des Bedieners (4), eine Geschwindigkeit des Bedieners (4), Richtungen der Körperbewegung des Bedieners (4), Informationen über die momentane Beschäftigung des Bedieners (4), den Fokus des Bedieners (4) und/oder Vitalzeichen des Bedieners (4) umfassen.

6. Verfahren nach einem der Ansprüche 1 bis 5, wobei das Computersystem (3) zusätzlich zum Präsentieren der ausgewählten Informationen mit der Mensch-Maschine-Schnittstelle (8; 9; 10; 11) einen Alarm auslöst, um den Bediener (4) auf die ausgewählten Informationen aufmerksam zu machen.

7. Verfahren nach Anspruch 6, wobei der Alarm ausgelöst wird, falls die ausgewählten Informationen ein dringende und/oder wichtige Aufgabe und/oder ein Warnung sind.

8. Verfahren nach Anspruch 6 oder 7, wobei die Warnung optisch, akustisch und/oder haptisch, zum Beispiel durch ein Lichtsignal, einen Warnton oder eine Vibration, erfolgt.

9. Verfahren nach einem der Ansprüche 1 bis 8, wobei die zum Präsentieren der Informationen ausgewählte Mensch-Maschine-Schnittstelle (8; 9; 10; 11) eine primäre Mensch-Maschine-Schnittstelle (8; 9) ist, die sich an oder nahe der Maschine (2) in der Nähe des Bedieners (4) befindet, oder eine sekundäre, mobile Mensch-Maschine-Schnittstelle (10; 11) ist, die dem Bediener (4) zugeordnet ist.

10. Verfahren nach einem der Ansprüche 1 bis 9, wobei die Präsentation der Informationen in Abhängigkeit von der konkreten Mensch-Maschine-Schnittstelle (8; 9; 10; 11), auf der sie präsentiert werden, der Identität des Bedieners (4) und/oder der Entfernung des Bedieners (4) zu der Mensch-Maschine-Schnittstelle (8; 9; 10; 11) angepasst wird.

11. Verfahren nach einem der Ansprüche 1 bis 10, wobei, falls die dem Bediener (4) präsentierten Informationen eine auszuführende Aufgabe sind, der Bediener (4) die Aufgabe ausführt und die Vollendung der Aufgabe mit der Mensch-Maschine-Schnittstelle (8; 9; 10; 11) bestätigt oder die Mensch-Maschine-Schnittstelle (8; 9; 10; 11) verwendet, um einzugeben, warum die Aufgabe nicht vollendet wurde.

12. Maschinensystem,
wobei das Maschinensystem (1) nach einem der Ansprüche 1 bis 11 betrieben wird.

## Revendications

1. Procédé de fonctionnement d'un système de machines (1) comprenant une pluralité de machines (2), en particulier des dispositifs de machines-outils dotés de systèmes de commande à commande numérique (CN) ou à contrôleurs logiques programmables (CLP), dans lequel les machines (2) sont connectées à un système informatique (3) du système de machines (1), dans lequel le système de machines (1) comprend des interfaces homme-machine (8 ; 9 ; 10 ; 11) pour présenter des informations de machines (2) et dans lequel le système de machines (1) comprend au moins une unité de détection d'opérateur (6 ; 7), dans lequel
l'unité de détection d'opérateur (6 ; 7) détecte un opérateur de machine (4) se trouvant à proximité d'une machine (2) et/ou passant devant une machine (2) et collecte des données de comportement d'opérateur (5),
l'unité de détection d'opérateur (6 ; 7) envoie les données collectées de comportement d'opérateur (5) au système informatique (3),
les données de comportement d'opérateur (5) sont stockées par le système informatique (3),
des habitudes de comportement d'opérateur sont déterminées à partir des données de comportement d'opérateur (5),
le système informatique (3) sélectionne des informations à présenter audit opérateur de machine (4) en fonction des données de comportement d'opérateur (5) et des habitudes de comportement d'opérateur et sélectionne au moins l'une des interfaces homme-machine (8 ; 9 ; 10 ; 11) pour présenter lesdites informations,
dans lequel les informations sélectionnées à présenter à l'opérateur de machine (4) sont choisies parmi des informations d'état de machines (2), des informations de processus de production, des tâches qui doivent être effectuées sur des machines (2), des tâches qui devront être effectuées sur des machines (2) à l'avenir et/ou des messages d'avertissement et
les interfaces homme-machine sélectionnées (8 ; 9 ; 10 ; 11) présentent les informations sélectionnées.

2. Procédé selon la revendication 1, dans lequel l'interface homme-machine (8 ; 9 ; 10 ; 11) est un panneau (8 ; 10) conçu pour afficher les informations sélectionnées et/ou un haut-parleur (9 ; 11) conçu pour lire les informations sélectionnées.

3. Procédé selon la revendication 1 ou 2, dans lequel des interfaces homme-machine (8 ; 9 ; 10 ; 11) qui sont situées dans des zones où aucun opérateur (4) n'a été détecté par l'unité de détection d'opérateur (6 ; 7) sont mises en veille.

4. Procédé selon l'une quelconque des revendications 1 à 3, dans lequel l'unité de détection d'opérateur (6 ; 7) comprend un capteur de proximité (7), une caméra (6), une unité de communication sans fil et/ou une unité d'identification par radiofréquence.

5. Procédé selon l'une quelconque des revendications 1 à 4, dans lequel les données de comportement d'opérateur (5) incluent une identification d'opérateur (4), une localisation d'opérateur (4), une vitesse d'opérateur (4), des directions de mouvements du corps de l'opérateur (4), des informations sur l'occupation actuelle de l'opérateur (4), la concentration de l'opérateur (4) et/ou des signes vitaux de l'opérateur (4).

6. Procédé selon l'une des revendications 1 à 5, dans lequel, outre la présentation des informations sélectionnées avec l'interface homme-machine (8 ; 9 ; 10 ; 11), le système informatique (3) déclenche une alerte pour avertir l'opérateur (4) des informations sélectionnées.

7. Procédé selon la revendication 6, dans lequel l'alerte est déclenchée si les informations sélectionnées sont une tâche urgente et/ou importante et/ou un avertissement.

8. Procédé selon la revendication 6 ou 7, dans lequel l'alerte est visuelle, sonore et/ou haptique, par exemple par un signal lumineux, un son d'alerte ou une vibration.

9. Procédé selon l'une quelconque des revendications 1 à 8, dans lequel l'interface homme-machine (8 ; 9 ; 10 ; 11) choisie pour présenter les informations est une interface homme-machine primaire (8 ; 9) située au niveau de ou près de la machine (2), à proximité de l'opérateur (4) ou une interface homme-machine secondaire portable (10 ; 11) allouée à l'opérateur (4).

10. Procédé selon l'une quelconque des revendications 1 à 9, dans lequel la présentation des informations est adaptée en fonction de l'interface homme-machine particulière (8 ; 9 ; 10 ; 11) sur laquelle elles sont présentées, de l'identité de l'opérateur (4) et/ou de la distance entre l'opérateur (4) et l'interface homme-machine (8 ; 9 ; 10 ; 11) .

11. Procédé selon l'une quelconque des revendications 1 à 10, dans lequel, si les informations présentées à l'opérateur (4) sont une tâche à effectuer, l'opérateur (4) effectue la tâche et confirme l'achèvement de la tâche avec l'interface homme-machine (8 ; 9 ; 10 ; 11) ou utilise l'interface homme-machine (8 ; 9 ; 10 ; 11) pour indiquer pourquoi la tâche n'a pas été accomplie.

12. Système de machines,
dans lequel le système de machines (1) fonctionne selon l'une quelconque des revendications 1 à 11.
